# EUROPÄISCHE PATENTSCHRIFT

(11) **EP 0 680 490 B1**
(45) Veröffentlichungstag und Bekanntmachung des Hinweises auf die Patenterteilung: **03.07.1996**
(21) Anmeldenummer: 94904575.1
(22) Anmeldetag: 14.01.1994
(51) Int. Cl.: C08B 30/04, C08L 3/12, C08L 3/02

(54) **VERFAHREN ZUR HERSTELLUNG EINES POLYSACCHARID ENTHALTENDEN PRODUKTES SOWIE POLYSACCHARIDZUSAMMENSETZUNGEN**
PROCESS FOR PREPARING A POLYSACCHARIDE-CONTAINING PRODUCT AND POLYSACCHARIDE COMPOSITIONS
PROCEDE DE FABRICATION D'UN PRODUIT CONTENANT DES POLYSACCHARIDES, ET COMPOSITIONS DE POLYSACCHARIDES

(30) Priorität: 21.01.1993 DE 4301587
(43) Veröffentlichungstag der Anmeldung: 08.11.1995
(73) Patentinhaber: K&S BIO-PACK-ENTWICKLUNGSGESELLSCHAFT FÜR VERPACKUNGEN MBH, D-84529 Tittmoning (DE)
(72) Erfinder: STAUDERER, Markus, D-83308 Trostberg (DE); KALTENHAUSER, Ludwig, D-85429 Tittmoning (DE)
(74) Vertreter: KUHNEN, WACKER & PARTNER
(86) Internationale Anmeldenummer: DE9400029
(87) Internationale Veröffentlichungsnummer: WO9417107

(56) Entgegenhaltungen:
- EP-A- 0 350 613
- EP-A- 0 376 201
- EP-A- 0 474 095
- WO-A-93/06013
- BE-A- 654 605
- DE-A- 2 922 247
- STÄRKE Bd. 39, Nr. 12 , 1987 , DE Seiten 416 - 421 N. U. HAASE ET AL. 'Vergleichende Untersuchungen zur Erbsenstärkeisolierung auf nasstechnischem Wege'

## Beschreibung

Die vorliegende Erfindung betrifft ein Verfahren zur Herstellung eines im wesentlichen Polysaccharid enthaltenden Produktes gemäß dem Oberbegriff des Patentanspruchs 1, ein Polysaccharidprodukt gemäß Patentanspruch 13, eine Polysaccharidzusammensetzung gemäß Anspruch 16 sowie einen Gegenstand gemäß Patentanspruch 21.

Es ist bekannt, aus Amylosehaltigen Pflanzen oder Pflanzenteilen, etwa aus Kartoffeln, deren Amylose zu isolieren.

Zum Beispiel offenbart DE-A-2 922 247 ein Verfahren zur Abtrennung von Proteinen und Kohlenhydraten aus Erbsen. Die Erbsen werden fein gemahlen und in einem wässrigen Medium suspendiert und gerührt. Der gewünschte pH-Wert kann durch Alkalihydroxide oder Säure eingestellt werden. Durch Sieb-, Filtration- und Zentrifugierungstufen wird die Proteinphase von den Kohlenhydraten getrennt.

Es ist auch bekannt gemäß EP-A-0 376 201, Stärke, einen natürlich vorkommenden Amylose-Amylopektin-Komplex mit einem Amylosegehalt über 65%, also keine reine Amylose in einem Extruder zu behandeln. Ferner wird gemäß BE-A-654 605 eine Zusammensetzung aus reiner Amylose, Wasser und Weichmacher extrudiert.

Aber derartige Amylosen sind jedoch nicht geeignet, als Ersatz für Kunststoffe in der kunststoffverarbeitenden Industrie zu dienen.

Hierbei ist insbesondere der Aspekt der nachwachsenden Rohstoffe und deren volle biologische Abbaubarkeit interessant.

Ein Hauptproblem, nachwachsende Rohstoffe industriell zu nutzen, lag darin begründet, daß die in diesen pflanzlichen Rohstoffen enthaltenen Biopolymere einerseits zu einem zu niedrigen Gehalt vorkamen und andererseits gerade nicht wie die in der kunststoffverarbeitenden Industrie verwendeten chemischen Polymere verarbeitet werden konnten.

Ein weiteres Problem liegt darin, daß bisher bekannte Biopolymere, wie Proteine oder Polypeptide, Polynukleotide und Polysaccharide, welche in diversen pflanzlichen und tierischen Rohstoffen vorkommen, eine nur äußerst geringe Widerstandskraft gegenüber Feuchtigkeit aufweisen.

Daher ist es Aufgabe der vorliegenden Erfindung, ein Verfahren zur Herstellung eines Biopolymers zur Verfügung zu stellen, dessen Verfahrensprodukt zu praktisch verwendbaren Gegenständen verarbeitet werden kann.

Verfahrenstechnisch wird diese Aufgabe durch die Merkmale des Patentanspruchs 1 gelöst.

Darüber hinaus wird die obige Aufgabe durch ein Polysaccharidprodukt gemäß Patentanspruch 09 gelöst.

Ferner löst die Polysaccharidzusammensetzung gemäß Patentanspruch 12 die obige Aufgabe.

Eine weitere Lösung dieser Aufgabe stellt ein Gegenstand gemäß Patentanspruch 16 dar.

Durch das erfindungsgemäße Verfahren gemäß Patentanspruch 1 wird es erstmals ermöglicht, ein Polysaccharidprodukt weitgehend proteinfrei aus einem pflanzlichen Material herzustellen.

Ein besonderes Polysaccharidprodukt, nämlich eine Amylose, ergibt sich, wenn man als pflanzliches Material Erbsensamen einsetzt.

Die Unteransprüche 2 bis 8 stellen vorteilhafte Ausführungsformen des erfindungsgemäßen Verfahrens dar.

Das aus dem erfindungsgemäßen Verfahren erhaltene Polysaccharidprodukt gemäß Anspruch 09 fällt in der Regel als Pulver an, welches jedoch nach üblichen Maßnahmen, beispielsweise durch Extrusion, zu einem Granulat gemäß Patentanspruch 10 verarbeitet werden kann.

Darüber hinaus weist das mittels des erfindungsgemäßen Verfahrens erhaltene Polysaccharidprodukt thermoplastische Eigenschaften auf. Dies gilt insbesondere für eine Amylose, welche aus relativ amylosereichen Erbsensorten erhalten wird.

Dabei werden typischerweise sogenannte Markerbsen verwendet, welche einen besonders hohen Amylosegehalt aufweisen, jedoch ergebn sich ebenfalls vorteilhafte Polysaccharidprodukte, wenn man beispielsweise Zahnmais verwendet.

Aus derartigen Erbsensorten erhaltene Amylose-Polysaccharidprodukte weisen den Vorteil auf, daß sie thermoplastische Eigenschaften haben und somit gemäß Anspruch 11 mit den in der kunststoffverarbeitenden Technik üblichen Verfahren zu Formteilen weiterverarbeitet werden können. Dies bedeutet, daß keinerlei aufwendige maschinelle Nachrüstung der bisher existierenden kunststoffverarbeitenden Industrieanlagen erforderlich ist, so daß derartige Produkte schon von dieser Seite der Wirtschaftlichkeitsbetrachtung her kostengünstig gefertigt werden können.

Darüber hinaus liegt ein besonderer Vorteil derartiger Amylose-Polysaccharid-Produkte darin begründet, daß der Kilopreis in etwa in der Größenordnung für gängige Kunststoff-Thermoplaste liegt, wobei gleichzeitig keine Abhängigkeit von dem Rohstoff "Erdöl" besteht, sondern, im Gegenteil, der steigende Bedarf durch nachwachsende Rohstoffe gedeckt werden kann, wobei gerade im Rahmen der Europäischen Gemeinschaft, die Landwirte hier eine einschneidend neue Aufgabe bekommen. So können beispielsweise auf ca. 400 ha Anbaufläche soviele Erbsen angebaut werden, daß die Ernte eine Gesamtmenge von ca. 1,2 Tonnen Amylose ergibt.

Jedoch kann der Preis noch dadurch dramatisch verringert werden, wenn man eine Polysaccharidzusammensetzung gemäß Anspruch 12 verwendet, bei der ein Amylose-Polysaccharidprodukt lediglich als Hauptbestandteil auftritt und wenigstens ein weiteres Material pflanzlichen Ursprungs in der Zusammensetzung enthalten ist.

Die Maßnahmen des Anspruchs 12 haben den Vorteil, daß hier eine breite Palette an pflanzlichen Materialien zur Verfügung steht, mit der auch gezielt die Eigenschaften der Polysaccharidzusammensetzung bzw. eines daraus hergestellten Produktes gesteuert werden können.

Die Maßnahmen des Anspruchs 13 weisen den Vorteil auf, daß durch eine derartige Polysaccharidzusammensetzung zum einen die Kosten weiter gesenkt werden können und zum anderen ebenfalls kein oder wenigstens doch ein geringer maschineller Aufwand zu treiben ist, so daß eine derartige Polysaccharidzusammensetzung mit den in der Kunststofftechnik üblichen Verfahren, insbesondere Spritzgußtechnik, verarbeitbar ist.

Eine bevorzugte, in der Praxis bereits erprobte und preisgünstige Polysaccharidzusammensetzung, ist in Anspruch 14 gegeben. Auch diese Polysaccharidzusammensetzung weist gemäß Anspruch 15 thermoplastische Eigenschaften auf, so daß sie zu Gegenständen gemäß Anspruch 16 weiterverarbeitet werden können.

Dabei ist es von außerordentlicher wirtschaftlicher Bedeutung, daß die Gegenstände der vorliegenden Erfindung vollständig aus Naturprodukten zusammengesetzt sind und daher im wesentlichen vollständig biologisch abbaubar sind, so daß keinerlei Entsorgungsprobleme, wie dies mit typischen Kunststoffteilen der Fall ist, entstehen.

Vielmehr können die erfindungsgemäßen Gegenstände, insbesondere aus Amylose-Polysaccharidprodukt, durch Kompostierung, Verfütterung an Nutztiere, Eingraben in Erde, nicht nur biologisch entsorgt werden, sondern darüber hinaus erbringen sie noch einen Nutzeffekt im Sinne eines Düngemittels bzw. Futtermittels, da in der Natur ubiquitär vorkommende Bakterien, Pilze und andere Organismen das Polysaccharid zu ihrer eigenen Nahrung verwenden und somit wieder in für Pflanzen nutzbare mineralische Stoffe umwandeln, während Tiere den enzymatischen Apparat haben, um Energie aus Polysaccharidprodukten zu gewinnen.

Da es sich bei den erfindungsgemäßen Polysaccharidprodukten chemisch um Vielfachzucker handelt, bestehen auch in toxikologischer Hinsicht keine Bedenken im Hinblick auf Anwendung im Lebensmittelbereich und/oder Entsorgung.

Die Gegenstände gemäß Anspruch 17 haben den Vorteil, daß Folien für die kunststoffverarbeitende Industrie, beispielsweise für Tiefziehen, Prägen oder dergleichen, verwendet werden können und auch hierbei keinerlei Entsorgungsprobleme auftreten, jedoch stehen sämtliche bekannten Vorteile der Kunststofftechnik auch bei Folien der vorliegenden Erfindung zur Verfügung.

Darüber hinaus spielt die vorliegende Erfindung eine überragende Rolle bei biologisch abbaubaren Verpackungsmaterialien aller Art, welche aus den Polysaccharidprodukten der vorliegenden Erfindung hergestellt werden können.

Insbesondere bei Einmalgebrauchsgegenständen, wie beispielsweise Trinkgefäßen aller Art, ist die überragende Bedeutung der vorliegenden Erfindung ersichtlich, da bei praktischem Einsatz der erfindungsgemäßen Gegenstände Tausende von Tonnen an nicht biologisch abbaubaren Kunststoffen eingespart werden können.

Die Gegenstände gemäß den Ansprüchen 18 bis 25 stellen vorteilhafte Weiterbildungen der vorliegenden Erfindung dar.

Dabei liegt ein besonderer Vorteil in einem Gegenstand gemäß Anspruch 20, da sich durch die transparente Herstellungsmöglichkeit ein praktisch vollständiger Ersatz der derzeit vorhandenen durchsichtigen Verpackungsmaterialien ergeben könnte.

Weitere Vorteile und Merkmale der vorliegenden Erfindung ergeben sich anhand der nachfolgenden Beschreibung von Ausführungsbeispielen.

### Beispiel 1

Im vorliegenden Beispiel wird die Herstellung eines im wesentlichen Polysaccharid - im Beispielsfalle Amylose- enthaltenden Produktes aus Markerbsen beschrieben. Markerbsen besitzen im Vergleich zu Palerbsen einige rohstoffspezifische Nachteile, die eine Amyloseisolierung in erheblichem Maße erschweren. Diese Nachteile liegen insbesondere in einem problematischen Amylose-Protein-Komplex.

Durch einen beachtlichen Rohfasergehalt wird die Gewinnung eines Polysaccharidproduktes ebenfalls erschwert, da die stark gequollenen Fasern bei der Amylose-Rohfaser-Separierung einen nicht unwesentlichen Anteil an Amylose binden. Dies führt zwar zu keiner Qualitätsminderung der Amylose, jedoch zu erheblichen Ausbeuteverlusten. Die Amyloseverluste können durch mehrfaches Nachwaschen der Faserfraktionen deutlich vermindert werden. Dadurch wird allerdings der Frischwasserbedarf wesentlich erhöht. Wirkungsvoller ist eine Faserabtrennung bereits vor Beginn des eigentlichen naßtechnischen Aufarbeitungsverfahrens. Nach trockener Vermahlung der Markerbsen auf dem Walzenstuhl kann durch Siebung der Rohfasergehalt um etwa 75% reduziert werden.

Man erhält auf diese Weise ca. 12% der Trockensubstanz als Kleiefraktion (Schrot- und Grießkleie) sowie ca. 88% Markerbsenmehl. Da der Rohfasergehalt der Kleiefraktion ca. 52% beträgt, wird der Rohfasergehalt der Markerbsen von 8,0% auf 2,0% im Markerbsenmehl gesenkt. Die Amyloseverluste von 1,8% in der Kleiefraktion sind vernachlässigbar.

Ein weiterer Nachteil der Markerbsen ist deren runzelige Samenform. Dadurch bedingt können sie im Gegensatz zu Palerbsen vor der trockenen Vermahlung nicht geschält werden, was eine weitere Verminderung des Rohfasergehaltes im Markerbsenmehl zur Folge hätte. Aufgrund des hohen Kleinkornanteils der MarkerbsenAmylose ist die Amylose-Protein-Separierung bedeutend erschwert, da zur vollständigen Sedimentation der Amylosekörner im Schwerefeld eines Separators, insbesondere eines Dekanters, eine relativ große Verweilzeit benötigt wird. Dadurch wird einerseits der Durchsatz vermindert und andererseits die Sedimentation größerer Proteinpartikel begünstigt. Aufgrund dieser Tatsache ist die Amylose, die im Unterlauf des Dekanters anfällt, stärker mit Protein verunreinigt als bei der Amylose-Protein-Separierung bei Palerbsen.

Der hohe Kleinkornanteil erleichtert allerdings die Rohfaserabtrennung durch Bogensieb oder Strahlauswascher, da relativ engmaschige Siebe verwendet werden können. Nach umfangreichen Vorversuchen kann eine Maschenweite für den Siebkorb des Strahlauswaschers von ca. 75 µm als günstig bezeichnet werden. Bei dieser Maschenweite sind die Amyloseverluste in der Faserfraktion noch relativ gering, obwohl bereits eine gute Faserseparierung erreicht wird.

Besonders problematisch ist bei Markerbsen der Amylose-Protein-Komplex. Diese feste Bindung von Proteinpartikeln an Amylosekörner läßt sich nur durch drastische Maßnahmen auflösen. In Betracht kommt das Quellen in verdünnter Natronlauge bei Raumtemperatur oder der Einsatz physikalischer Desintegrationstechniken wie z.B. die Hochdruckhomogenisierung.

Als Dispergiermedium wurden für das Markerbsenmehl verdünnte Natronlauge (0,03 n) und Leitungswasser verwendet. Durch verdünnte Natronlauge kann zwar die Löslichkeit des Proteins erhöht werden, jedoch wird es dabei entsprechend den gewählten Arbeitsbedingungen teilweise denaturiert, was jedoch nicht von Nachteil ist, wenn man das Protein nicht weiterverwerten will.

Mit zunehmendem pH-Wert wird die Löslichkeit des Proteins größer, so daß bei pH = 9,0 in Abhängigkeit von der Leguminosenart 75-90% des Proteins extrahiert werden können. Die Proteinlöslichkeit bzw. -dispergierbarkeit läßt sich auch durch Zusatz von basischen Salzen, wie z.B. Natriumkarbonat, Natriumhydrogenphosphat oder Natriumcitrat, wesentlich erhöhen. Der Einfluß der Ionenstärke (Salzkonzentration) des wäßrigen Lösungsmittels, der unterhalb von pH = 7,0 relativ groß ist, wird bei höheren pH-Werten deutlich geringer.

Durch Neutralsalze wie Natriumsulfat, Calciumchlorid oder Magnesiumchlorid wird die Proteinlöslichkeit bei niedrigen Salzkonzentrationen zunächst vermindert, um dann bei höheren Konzentrationen etwa auf den Wert von reinem Wasser anzusteigen.

Nach dem erfindungsgemäßen Verfahren werden 10 kg Markerbsenmehl in 50 kg 0,03 n Natronlauge 1 h unter intensivem Rühren aufgeschlossen und dann mittels eines handelsüblichen Zentrifugalseparators, einem sogenannten Dekanter, im kontinuierlichen Durchflußverfahren separiert.

Der Unterlauf des Dekanters (Amylosefraktion) wird anschließend wiederum in ca. 50 kg 0,03 n Natronlauge 1 h gerührt und nochmals separiert. Die Feststoffphase des Dekanters wird dann zur Faserabtrennung in 40 kg Leitungswasser suspendiert.

Die Oberläufe der 1. und 2. Separierung, die ca. 90 % des Proteins enthalten, werden vereinigt und bei Bedarf weiterverarbeitet. Zur Abtrennung der Grobfasern aus der Amylosefraktion wird zunächst ein 125 µm Bogensieb verwendet. Die Separierung der Feinfasern erfolgt dann mit einem Strahlauswascher, welcher in Prozeßrichtung hinter dem Bogensieb angeordnet ist (Maschenweite des Siebkorbes = 75 µm). In den abschließenden beiden Dekanterstufen werden Proteinreste und geringe Mengen an Mineralstoffen aus der Amylose entfernt. Der Unterlauf der letzten Separierung wird nun mit Wasser auf ca. 30 % Trockensubstanz eingestellt und unter schonenden Bedingungen sprühgetrocknet, so daß sich ein pulverförmiges Produkt ergibt.

Grundsätzlich kann Amylose auch mit Wasser als Lösungsmittel extrahiert werden.

Eine weitere Amylose-Extraktionsmöglichkeit liegt darin, daß die Faserseparierung in zwei Stufen erfolgt, wobei sowohl für die Grobfasern als auch für die Feinfasern Bogensiebe eingesetzt werden.Die abgetrennten Faserfraktionen des 125µm und 50µm Siebes werden dann dreimal mit jeweils 15 kg Leitungswasser nachgewaschen. Dadurch werden die Amyloseverluste erheblich reduziert, ohne daß die Faserseparierung nennenswert beeinflußt wird.

Dazu wird die Suspension aus ca. 10 kg Erbsenmehl in ca. 50 kg Wasser mit einem Volumenstrom V = 870 l/h und einem Homogenisatordruck von 180 bar ca. 15 min zirkuliert. Die weitere Amyloseaufarbeitung entspricht Beispiel 1.

Durch Einsatz des Homogenisators kann die Proteinseparation etwas verbessert werden. So steigt der Proteinanteil der Proteinlösung von 87,4 % auf 93,8 % bezogen auf das gesamte Mehlprotein.

Eine Analyse des erfindungsgemäß hergestellten Amylose-Polysaccharidproduktes zeigt, daß die nach Beispiel 1 alkalisch extrahierte Amylose lediglich ca. 0,4 Gew.-% Rohprotein, bezogen auf das trockene Pulver aufweist. Rohaschegehalt, Rohfasergehalt und Rohfettgehalt liegen deutlich unterhalb 1 Gew.-%, die Amyloseausbeute beträgt >90%.

### Beispiel 2

### Herstellung von Gegenständen aus Amylose bzw. Polysaccharidzusammensetzungen

Die aus Beispiel 1 erhaltene Amylose plastifiziert zwischen ca. 80 bis 100°C und weist somit thermoplastische Eigenschaften auf. Das sich bei der Herstellung nach Beispiel 1 üblicherweise ergebende Amylosepulver als Polysaccharidprodukt wird zunächst durch Vorextrudieren zu einem Granulat verarbeitet, welches in herkömmlichen Spritzgußmaschinen für die kunststoffverarbeitende Industrie zu becherförmigen Gegenständen verarbeitet wird.

Die Amylose weist dabei vorteilhaft wasserabstoßende Eigenschaften auf und verleiht dem im Beispielsfalle becherförmigen Gegenstand eine hohe Flexibilität und Bruchfestigkeit.

Die Festigkeit kann gegebenenfalls noch durch Zumischung von Mehlen aus Pflanzenfasern erhöht werden.

Obwohl ein derartiger Becher aus wenigstens weitgehend reiner Amylose hervorragende Gebrauchseigenschaften aufweist (vgl Tab. 1) können die Kosten eines derartigen becherförmigen Gegenstandes noch dadurch gesenkt werden, daß statt Amylose als Polysaccharidprodukt eine Polysaccharidzusammensetzung aus ca. 75 Gew.-% Amylose, 12,5% Weizenvollmehl und 12,5% Vollmehl aus Samen der Süßlupine verwendet werden.

Auch diese Polysaccharidzusammensetzung weist thermoplastische Eigenschaften auf und kann ohne weiteres mit der herkömmlichen Spritzgußtechnik zu Gegenständen unterschiedlicher Art, im Beispielsfalle Becher, verarbeitet werden.

Auch ein derartiger Becher weist dieselben günstigen Eigenschaften, wie Wasserfestigkeit, Flexibilität und biologische Abbaubarkeit, auf wie der becherförmige Gegenstand aus Amylose-Polysaccharidprodukt.

Zur praktischen Erprobung der mittels Spritzgußtechnik hergestellten biologisch abbaubaren Trinkbecher als Gegenstände wird in der folgenden Tabelle ein Flüssigkeitsexpositionstest wiedergegeben:

**Tab. 1**

| Flüssigkeitsexposition von Trinkbechern aus Amylose oder Polysaccharidzusammensetzungen | | | |
|---|---|---|---|
| Becherzusammensetzung | Standzeiten [h] | | |
| | H₂O ca. 20°C | H₂O ca.50°C | säurehaltiges Getränk ca.20°C |
| Amylose | 7-9 | | |
| | | | |
| 75% Amylose | | | |
| 12,5% Weizenvollmehl | 6-8 | 6-8 | 3-5 |
| 12,5% Samen aus Süßlupine | | | |

Somit ist es mit der vorliegenden Erfindung erstmals möglich, brauchbare Gegenstände aus einem Amylose-Polysaccharidprodukt bzw. aus einer Polysaccharidzusammensetzung herzustellen und damit wird ein lange existierendes Bedürfnis in der Technik befriedigt.

## Patentansprüche

1. Verfahren zur Herstellung von Amylose aus Erbsenmaterial, wobei das Erbsenmaterial getrocknet und vermahlen und gegebenenfalls vorgesiebt wird; und
wobei das entstandene Mehl zur Trennung in lösliche Protein- und unlösliche Polysaccharidbestandteile mit 10 bis 100 mM NaOH als flüssigem Aufschlußmittel versetzt wird und das Mehl unter Rühren aufgeschlossen wird,
wobei a) eine Trennung in eine flüssige Proteinphase und eine Polysaccharid enthaltende Feststoffphase durchgeführt wird;
wobei b) die Feststoffphase in Wasser aufgeschlämmt wird;
wobei c) die wäßrige Polysaccharidaufschlämmung zur Abtrennung von Rohfasern und/oder Restprotein wenigstens zwei Siebschritten mit wenigstens einer Siebanordnung definierter Maschenweite unterzogen wird;
wobei d) der Siebdurchlauf erneut in die Polysaccharid enthaltende Feststoffphase und die flüssige Phase zerlegt wird; und
wobei e) die nunmehr weitgehend proteinfreie, im wesentlichen Amylose enthaltende Feststoffphase, gegebenenfalls nach einem Waschschritt, einem Trocknungsschritt ausgesetzt wird;
wobei
Erbsen verwendet werden, deren Amylosegehalt im Bereich von ca. 70 Gew% bis 93 Gew% liegt;
der erste Siebschritt mittels eines Bogensiebes durchgeführt wird und der zweite Siebschritt mittels eines Strahlauswaschers durchgeführt wird;
ein Strahlauswascher mit einem Sieb und/oder einem Siebkorb mit einer Maschenweite von ca. 50 µm bis 90 µm, vorzugsweise ca. 75 µm, wobei der Neigungswinkel des Siebkorbes ca. 15° bis 45°, vorzugsweise ca. 20° beträgt, verwendet wird.

2. Verfahren nach Anspruch 1, dadurch gekennzeichnet, daß der Amylosegehalt der Erbsen bevorzugt in einem Bereich von ca. 70 Gew% bis 90 Gew%, und besonders bevorzugt in einem Bereich von ca. 70 Gew% bis 85 Gew% liegt.

3. Verfahren nach Anspruch 1 oder 2, dadurch gekennzeichnet, daß als Aufschlußmittel eine wäßrige Lösung von Natriumhydroxid, insbesondere in einer Konzentration von ca. 20 bis 80 mM, bevorzugt ca. 30 mM, verwendet wird.

4. Verfahren nach einem der vorhergehenden Ansprüche, dadurch gekennzeichnet, daß Schritt a) und/oder Schritt d) durch Zentrifugieren im kontinuierlichen Durchfluß, vorzugsweise mittels eines Dekanters, durchgeführt wird.

5. Verfahren nach Anspruch 4, dadurch gekennzeichnet, daß der Austrag der sedimentierten Feststoffphase mittels einer Schnecke durchgeführt wird.

6. Verfahren nach einem der Ansprüche 1 bis 5, dadurch gekennzeichnet, daß man ein Bogensieb mit einer Maschenweite von ca. 90 µm bis 140 µm, vorzugsweise ca. 125 µm, verwendet.

7. Verfahren nach Anspruch 6, dadurch gekennzeichnet, daß man das Bogensieb und den Strahlauswascher in Prozeßrichtung hintereinander anordnet.

8. Verfahren nach einem der vorhergehenden Ansprüche, dadurch gekennzeichnet, daß man in Schritt e) zum Trocknen des erhaltenen Amyloseproduktes einen Sprühtrockner verwendet.

9. Erbsenamyloseprodukt, erhältlich nach einem Verfahren gemäß einem der Ansprüche 1 bis 8,
dadurch gekennzeichnet, daß
es ohne Zusatz von Wasser und Weichmacher thermoplastisch verarbeitbar ist.

10. Erbsenamyloseprodukt nach Anspruch 9, dadurch gekennzeichnet, daß es als Pulver und/oder Granulat vorliegt.

11. Erbsenamyloseprodukt nach Anspruch 9 oder 10, dadurch gekennzeichnet, daß es mit den in der kunststoffverarbeitenden Technik üblichen Verfahren zu Formteilen weiterverarbeitet werden kann.

12. Thermoplastisch verarbeitbare Polysaccharidzusammensetzung, enthaltend:
Ca. 50 Gew.-% bis 90 Gew.-% Amylose als Hauptbestandteil, welche erhältlich ist gemäß einem Verfahren nach einem der Ansprüche 1 bis 8; und wenigstens ein weiteres Material pflanzlichen Ursprungs, wobei ein Mehl verwendet wird, welches ausgewählt wird aus der Gruppe bestehend aus:
Gräsern, insbesondere Viskantus (Elefantengras); Getreide, insbesondere Weizen, Roggen, Hafer, deren Körner und/oder deren Kleie und/oder deren Stroh; Lupinen, insbesondere alkaloidarme Süßlupinen, vorzugsweise deren Samen; Kreuzblütler, insbesondere Leindotter; Hülsenfrüchte, insbesondere Erbsen, Linsen, Bohnen, vorzugsweise Sojabohnen; Pflanzenfasern wie Kokos-, Sisal-, Bananenfasern, insbesondere Pflanzenfasern mit lang strukturierter Cellulose; sowie deren Mischungen.

13. Polysaccharidzusammensetzung nach Anspruch 12, dadurch gekennzeichnet, daß die Polysaccharidzusammensetzung mit in der Kunststofftechnik üblichen Verfahren, insbesondere Spritzgußtechnik, verarbeitbar ist.

14. Polysaccharidzusammensetzung nach Anspruch 12 oder 13, dadurch gekennzeichnet, daß sie folgende quantitative Zusammensetzung aufweist:
Amylose: ca. 50 Gew% bis 90 Gew%, insbesondere ca. 60 Gew% bis 80 Gew%, vorzugsweise 75 Gew%;
Weizenvollmehl: ca. 5 Gew% bis 50 Gew%, insbesondere ca. 10 Gew% bis 20 Gew%, vorzugsweise ca. 12,5 Gew%; sowie
Vollmehl aus Samen der Süßlupinen: ca. 5 Gew% bis 50 Gew%, insbesondere ca. 10 Gew% bis 20 Gew%, vorzugsweise ca. 12,5 Gew%.

15. Gegenstand aus einer Polysaccharidzusammensetzung gemäß Anspruch 12 bis 14 dadurch gekennzeichnet, daß der Gegenstand biologisch abbaubar ist und mit Wasser bei Raumtemperatur wenigstens eine Standzeit von ca. 5 Stunden aufweist.

16. Gegenstand, im wesentlichen Amylose enthaltend, erhältlich gemäß einem der Ansprüche 1 bis 8, dadurch gekennzeichnet, daß der Gegenstand biologisch abbaubar ist und mit Wasser bei Raumtemperatur wenigstens eine Standzeit von ca. 5 Stunden aufweist.

17. Gegenstand nach Anspruch 15 oder 16, dadurch gekennzeichnet, daß er ausgewählt wird aus der Gruppe bestehend aus: Folien für die kunststoffverarbeitende Industrie; Gebrauchsgegenständen, insbesondere Einmalgebrauchsgegenständen, insbesondere Eßgeschirren, Bestecken, Trinkgefäßen; Verpackungen, insbesondere Tüten, Taschen, Folien, Blistern, Schläuchen, Dosen.

18. Gegenstand nach Anspruch 17, dadurch gekennzeichnet, daß der Gegenstand eine Folie zur kunststofftechnischen Weiterverarbeitung ist.

19. Gegenstand nach Anspruch 16 oder 17, dadurch gekennzeichnet, daß er ein Trinkgefäß ist, welches mit einem säurehaltigen Erfrischungsgetränk wenigstens eine Standzeit von ca. 3 Stunden aufweist.

20. Gegenstand nach einem der Ansprüche 15 bis 19, dadurch gekennzeichnet, daß er transparent oder wenigstens durchscheinend ist.

## Claims

1. Process for the manufacture of amylose from pea material wherein the pea material is dried and ground and possibly sieved; and
wherein the powder obtained is mixed with 10 to 100 mM NaOH as liquid disintegrating agent in order to separate it into soluble protein and insoluble polysaccharide components and wherein the powder is disintegrated in a stirring action,
wherein a) a separation into a liquid protein phase and a polysaccharide-containing solid matter phase is performed;
wherein b) the solid matter phase is suspended in water;
wherein c) the aqueous polysaccharide suspension is subjected to at least one sieving step with at least one sieve arrangement of defined mesh width for separating raw fibers and/or residual protein;
wherein d) the sieve pass is divided once more into said polysaccharide-containing solid matter phase and said liquid phase; and
wherein e) the solid matter phase, now essentially protein-free, basically containing amylose is possibly subjected to a drying step after a washing step;
wherein
peas are used whose amylose content ranges from about 70 % by weight to 93 % by weight;
the first sieving step is performed by means of a sieve bend and the second sieving step is performed by means of a stream elution apparatus;
a stream elution apparatus having a sieve and/or a strainer basket with a mesh width of about 50 µm to 90 µm, preferably about 75 µm is used, with the angle of inclination of the strainer basket being about 15° to 45°, preferable about 20°.

2. A process according to claim 1, characterized in that the amylose contents of the peas ranges preferably from 70 % by weight to 90 % by weight, and particularly preferred from about 70 % by weight to 85 % by weight.

3. A process according to claim 1 or 2, characterized in that an aqueous solution of sodium hydroxide, in particular in a concentration of about 20 to 80 mM, preferably about 30 mM, is used as disintegrating agent.

4. A process according to one of the preceding claims, characterized in that step a) and/or step d) is performed by centrifuging in a continuous flow, preferably by means of a decanter.

5. A process according to claim 4, characterized in that the discharging of the sedimented solid matter phase is performed by means of a screw.

6. A process according to one of claims 1 to 5, characterized in that a sieve bend having a mesh width of about 90 µm to 140 µm, preferably about 125 µm is used.

7. A process according to claim 6, characterized in that the sieve bend and the stream elution apparatus are arranged one behind the other in the direction of the process.

8. A process according to one of the preceding claims, characterized in that in step e) a spray drier is used for drying the obtained amylose product.

9. Pea amylose product, obtainable according to a process in accordance with one of claims 1 to 8,
characterized in that
it can be processed as a thermoplastic without the addition of water and softener.

10. Pea amylose product according to claim 9, characterized in that it is present as powder and/or granulate.

11. Pea amylose product according to claim 9 or 10, characterized in that it can be further processed to moulded parts by means of processes which are conventional in plastics technology.

12. Polysaccharide composition which can be processed as a thermoplast, containing:
about 50 % by weight to 90 % by weight amylose as main component, obtainable in accordance with a process according to one of claims 1 to 8; and
at least one further material of plant origin, with a powder being used which is selected from the group consisting of:
grasses, especially viscantus (elephant grass); cereal, especially wheat, rye, oats their corns and/or their bran and/or their straw; lupines, especially alkaloid poor sweet lupines, preferably their seeds; crucifers, in particular dodder seed; leguminosae, in particular peas, lentils, beans, preferably soybeans; plant fibres such as coconut, sisal and banana fibres, especially plant fibres with a long structured cellulose; as well as mixtures thereof.

13. Polysaccharide composition according to claim 12, characterized in that the polysaccharide composition can be processed by means of conventional processes of plastics technology especially by means of injection moulding.

14. A polysaccharide composition according to claim 12 or 13, characterized in that it has the following quantitative composition:
amylose: about 50 % by weight to 90 % by weight, especially about 60 % by weight to 80 % by weight, preferably about 75 % by weight;
full wheat flower: about 5 % by weight to 50 % by weight, especially about 10 % by weight to 20 % by weight, preferably about 12.5 % by weight; and
full flower obtained from the seeds of sweet lupines: about 5 % by weight to 50 % by weight, particularly about 10 % by weight to 20 % by weight, preferably about 12.5 % by weight.

15. An article made of a polysaccharide composition in accordance with claims 12 to 14 characterized in that the article is biodegradable and has a service life of at least about 5 hours at room temperature when filled with water.

16. An article essentially containing amylose obtainable according to one of claims 1 to 8, characterized in that said article is biodegradable and has a service life of at least about 5 hours at room temperature when filled with water.

17. An article according to claim 15 or 16, characterized in that it is selected from the group consisting of: sheets for the plastics processing industry; commodity articles, in particular commodity articles for single use, in particular dishes, cutlery, drinking vessels; packaging, in particular bags, sheets, blisters, hoses, cans.

18. An article according to claim 17, characterized in that said article is a sheet for being further processed by plastics engineering.

19. An article according to claim 16 or 17, characterized in that it is a drinking vessel which has a service live of at least about 3 hours at room temperature when filled with an acid containing beverage.

20. An article according to one of claims 15 to 19, characterized in that it is transparent or at least opaque.

## Revendications

1. Procédé de préparation d'amylose à partir de pois, lesdits pois étant séchés et broyés et éventuellement pré-tamisés ; et
la mouture formée étant mélangée avec 10 à 100 mM de NaOH, comme agent liquide de décomposition, pour être séparée en constituants protéines solubles et polysaccharides insolubles, la mouture étant décomposée sous agitation ;
dans lequel :
a) on effectue une séparation en une phase protéique liquide et une phase solide contenant un polysaccharide ;
b) on met la phase solide en suspension dans de l'eau ;
c) on soumet la suspension aqueuse de polysaccharide à deux étapes de tamisage, au moins, avec au moins un dispositif de tamisage ayant une ouverture de mailles définie, pour séparer les fibres brutes et/ou la protéine résiduaire ;
d) on décompose le produit tamisé de nouveau en la phase solide contenant le polysaccharide et la phase liquide ; et
e) après une éventuelle opération de lavage, la phase solide, qui est maintenant amplement exempte de protéine et contient essentiellement de l'amylose, est soumise à une opération de séchage ;
procédé dans lequel :
on utilise des pois dont la teneur en amylose est comprise entre environ 70 % en poids et 93 % en poids ;
on effectue la première opération de tamisage au moyen d'un tamis courbé et on effectue la deuxième étape de tamisage au moyen d'un dispositif de lavage à jet ;
on utilise un dispositif de lavage à jet avec un tamis et/ou un panier de tamisage ayant une ouverture de mailles d'environ 50 µm à 90 µm, de préférence d'environ 75 µm, l'angle d'inclinaison du panier de tamisage étant d'environ 15° à 45°, de préférence environ 20°.

2. Procédé selon la revendication 1, caractérisé en ce que la teneur en amylose des poids est comprise, de préférence, entre environ 70 % en poids et 90 % en poids, et d'une manière particulièrement préférée entre environ 70 % en poids et 85 % en poids.

3. Procédé selon la revendication 1 ou 2, caractérisé en ce qu'on utilise, comme agent de décomposition, une solution aqueuse d'hydroxyde de sodium, en particulier à une concentration d'environ 20 à 80 mM, de préférence environ 30 mM.

4. Procédé selon l'une des revendications précédentes, caractérisé en ce qu'on effectue l'étape a) et/ou l'étape d) par centrifugation en continu, de préférence au moyen d'un décanteur.

5. Procédé selon la revendication 4, caractérisé en ce qu'on effectue l'évacuation de la phase solide sédimentée au moyen d'une vis sans fin.

6. Procédé selon l'une des revendications 1 à 5, caractérisé en ce qu'on utilise un tamis courbé ayant une ouverture de mailles d'environ 90 µm à 140 µm, de préférence environ 125 µm.

7. Procédé selon la revendication 6, caractérisé en ce qu'on dispose le tamis courbé et le dispositif de lavage à jet l'un derrière l'autre dans le sens de marche du procédé.

8. Procédé selon l'une des revendications précédentes, caractérisé en ce qu'on utilise un dispositif de séchage par pulvérisation dans l'étape e) pour sécher le produit amylose obtenu.

9. Produit amylose de pois qu'on peut obtenir d'après un procédé selon l'une des revendications 1 à 8, caractérisé en ce qu'on peut le transformer de manière thermoplastique sans utiliser d'eau et sans plastifiant.

10. Produit amylose de pois selon la revendication 9, caractérisé en ce qu'il se présente sous la forme d'une poudre et/ou de granules.

11. Produit amylose de pois selon la revendication 9 ou 10, caractérisé en ce qu'on peut le transformer de façon complémentaire en articles moulés au moyen des procédés usuels dans la technique de transformation des matières plastiques.

12. Composition de polysaccharide pouvant être transformée de manière thermoplastique, contenant :
environ 50 % en poids à 90 % en poids d'amylose, comme constituant principal, qu'on peut obtenir d'après un procédé selon l'une des revendications 1 à 8 ; et
au moins un autre matériau d'origine végétale,
et on utilise une mouture choisie dans l'ensemble constitué par :
les herbes, en particulier l'herbe à éléphant ; les céréales, en particulier le blé, le seigle, l'avoine, leurs grains et/ou leur son et/ou leur paille ; les lupins, en particulier les lupins doux à faible teneur en alcaloïdes, de préférence leurs graines ; les cruciféracées, en particulier la cameline ; les légumineuses, en particulier les pois, les lentilles, les haricots, de préférence le soja ; les fibres végétales comme les fibres de coco, de sisal ou de banane, en particulier les fibres végétales contenant de la cellulose à structure longue ; ainsi que leurs mélanges.

13. Composition de polysaccharide selon la revendication 12, caractérisée en ce qu'on peut la transformer au moyen des procédés usuels dans la technique de transformation des matières plastiques, en particulier la technique de coulée par injection.

14. Composition de polysaccharide selon la revendication 12 ou 13, caractérisée en ce qu'elle a la composition quantitative suivante :
amylose : environ 50 % en poids à 90 % en poids, en particulier environ 60 % en poids à 80 % en poids, de préférence 75 % en poids ;
farine entière de blé : environ 5 % en poids à 50 % en poids, en particulier environ 10 % en poids à 20 % en poids, de préférence environ 12,5 % en poids ; ainsi que
farine entière de graines de lupin doux : environ 5 % en poids à 50 % en poids, en particulier environ 10 % en poids à 20 % en poids, de préférence environ 12,5 % en poids.

15. Article formé d'une composition de polysaccharide selon les revendications 12 à 14, caractérisé en ce qu'il est biodégradable et a une vie utile d'au moins environ 5 heures, avec de l'eau, à la température ambiante.

16. Article contenant essentiellement de l'amylose qu'on peut obtenir selon l'une des revendications 1 à 8, caractérisé en ce qu'il est biodégradable et a une vie utile d'au moins environ 5 heures, avec de l'eau, à la température ambiante.

17. Article selon la revendication 15 ou 16, caractérisé en ce qu'il est choisi dans l'ensemble constitué par les feuilles pour l'industrie de transformation des matières plastiques ; des objets usuels, en particulier des objets à usage unique, notamment de la vaisselle, des couverts, des récipients à boire ; des emballages, en particulier des sachets en papier, des sacs, des feuilles, des blisters, des tubes flexibles et des boîtes métalliques.

18. Article selon la revendication 17, caractérisé en ce qu'il est une feuille pour l'industrie de transformation des matières plastiques.

19. Article selon la revendication 16 ou 17, caractérisé en ce qu'il est un récipient à boire qui a une vie utile d'au moins environ 3 heures quand il contient une boisson rafraîchissante contenant un acide.

20. Article selon l'une des revendications 15 à 19, caractérisé en ce qu'il est transparent ou au moins translucide.
